Europäisches Patentamt

European Patent Office

Office européen des brevets

(11) Publication number: **0 265 789 B1**

# EUROPEAN PATENT SPECIFICATION

(45) Date of publication of patent specification: **17.07.91**  (51) Int. Cl.⁵: **F16J  15/18**

(21) Application number: **87115107.2**

(22) Date of filing: **16.10.87**

(54) Split gland seal assembly.

(30) Priority: **29.10.86 US 924708**

(43) Date of publication of application:
**04.05.88 Bulletin  88/18**

(45) Publication of the grant of the patent:
**17.07.91 Bulletin  91/29**

(84) Designated Contracting States:
**DE ES FR GB**

(56) References cited:
**EP-A- 0 017 070**
**GB-A- 1 601 732**
**US-A- 2 807 484**
**US-A- 3 975 026**
**US-A- 4 623 152**

(73) Proprietor: **GENERAL ELECTRIC COMPANY**
**1 River Road**
**Schenectady New York 12305(US)**

(72) Inventor: **Adams, David G.**
**Box 131,Vly Summit Rd.**
**Greenwich New York 12834(US)**

(74) Representative: **Sieb, Rolf, Dr. et al**
**General Electric - Deutschland Patentab-**
**teilung Praunheimer Landstrasse 50**
**W-6000 Frankfurt/Main(DE)**

## Description

The present invention relates to a split gland seal assembly. More particularly, the present invention relates to a split gland seal assembly for retrofitting certain packed seals to packingless use.

## Background of the Invention

Packed seals are well-known (e.g. from US-A-3975026) and used to prevent leakage around various rotating machine parts, such as pump shafts, mixer shafts and the like. However, it is also known that such seals require constant maintenance to minimize leakage. The packing gland which applies pressure to the packing in the stuffing box must be periodically tightened and, on a less frequent basis, the packing in the box must be supplemented with additional packing or entirely replaced. Further, even with ideal maintenance, packed seals will leak over time due to uneven shaft wear at the point of packing contact and wear on the shaft at other contact points leading to shaft run out and wobble.

Replacement of worn shafts in smaller machinery is a very simple matter requiring a few hours time and a comparatively few inexpensive parts. However, for machinery using a large diameter shaft, for example, a shaft having a diameter of 2 inches (50 mm) or more, the situation is quite different. Replacing a shaft in this case will require a hoist to remove the housing, a hoist to remove the shaft, and subsequently a great amount of manpower and down time. Most important, however, the cost of the shaft including the impeller or mixer blade assembly will often exceed the replacement cost of the machinery. Manufacturing a single or a few large shafts with high tolerance for placement in machine that may be 20 years old is not a situation where the cost effectiveness of mass production may be realized.

It is therefor an object of the present invention to provide a split seal assembly to retrofit packed seals to packingless seals.

It is a further object of the present invention to provide a split seal assembly to operate under conditions where the shaft is worn and exhibits resultant run out and wobble.

It is yet another object of the present invention to provide a split seal assembly which can be placed on the shaft without accessing of the shaft ends.

## Summary of the Invention

Prior Art document US-A- 3975026 discloses a seal assembly containing a sealing device (sealing cartridge) for a shaft defining an axially centered opening containing:

(i) a first seal engaging surface radially located around the opening to engage a seal with the protruding shaft;

(ii) a mounting portion radially spaced from seal engaging surfaces;

(iii) a second seal engaging surface or connecting surface on the axial inner face of the gland radially spaced from the opening to engage packing elements, and

(iv) a third seal engaging surface on the axial inner face of the gland radially spaced from said second seal engaging surface to engage a seal with a rim area of an opening through the casing wall.

According to the present invention there is provided a split seal assembly, where the sealing device is a seal gland for a stuffing box and where a spool is located in the stuffing box, said spool, extending along the axis of the opening from the second seal engaging surface of the gland, having length, diameter and thickness to substantially occupy the stuffing box and having on the interior surface thereof a fourth seal engaging surface to engage a seal with a shaft; wherein the seal gland and the spool are split along a plane which is defined by the axis of the opening and a point not on the axis with means to mate the split. Further, there is provided a method for retrofitting a packed seal therewith.

## Description of the Drawings

Figure 1 is a plan view of the seal gland of the present invention.

Figure 2 is a cross sectional view of the seal gland taken along the split 7 of Figure 1.

Figure 3 is a cross sectional view of the seal gland in alignment with the spool of the instant invention.

Figure 4 is a cross sectional view of the seal gland and spool inserted into a stuffing box to seal a shaft.

## Detailed Description of the Invention

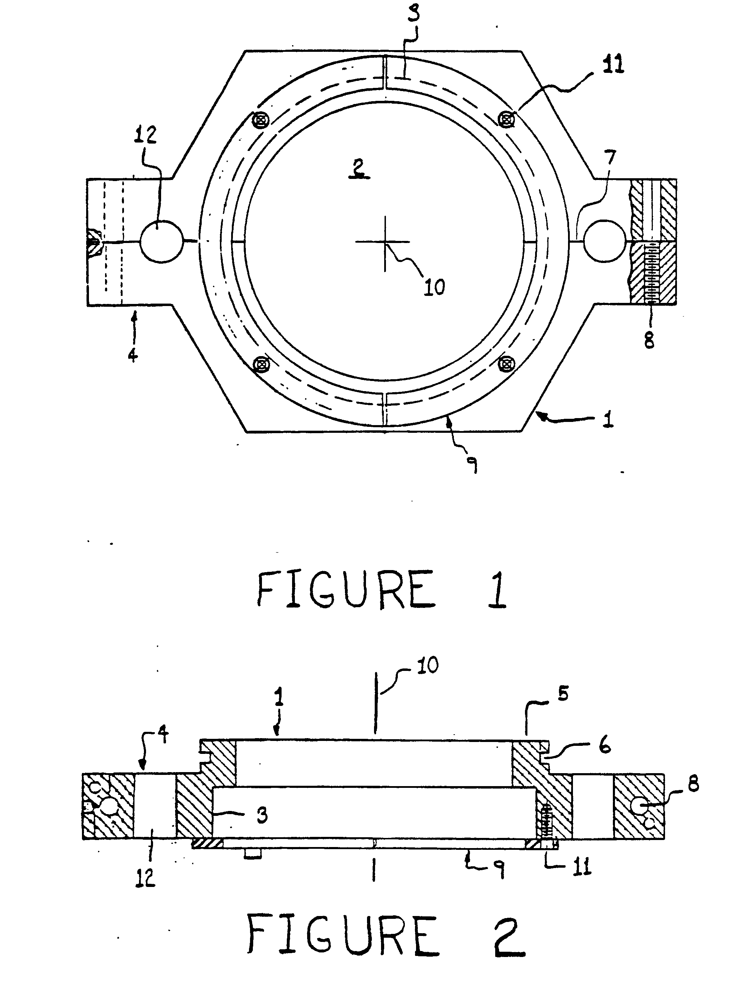

Referring now to the drawings, Figures 1-4 illustrate a seal gland 1 and its use according to a preferred embodiment of the invention. Seal gland 1 comprises a casting in the form of an annulus which defines a circular opening 2 and is adapted for mounting around a shaft 16 of predetermined diameter. The annulus is split along split 7 which if extended would pass through the axis 10 of the circular opening 2. One set of bolt positions 8 is provided as a means to mate the split 7.

Radially located around opening 2 is a first seal engaging surface 3. Seal engaging surface 3 should be positioned relative to the shaft 16 to allow a first seal 19 to be inserted and engaged with the shaft. Persons skilled in the art can imagine suitable seals for use on seal engaging surface 3. A preferred seal is a lip seal. In this embodiment seal retaining means 9 forms an edge around seal engaging surface 3 to prevent seal 19 seated on seal engaging surface 3 from working free. Bolt positions 11 are provided to secure seal retaining means 9. Of course, seal retaining means 9 can be cast as part of seal gland 1, but is provided as a separate split part to facilitate replacement of seal 19 seated on seal engaging surface 3. In the embodiment shown, seal 19 consists of dual lip seals seated on seal engaging surface 3.

Spaced radially from seal engaging surfaces 3 and 6 are mounting portions 4 containing bolt positions 12. Mounting portions 4 are intended for use to secure the seal gland 1 to the machinery housing 18. Mounting the seal gland 1 may be accomplished with clamps, bolts, etc., the means of mounting not being critical to the invention. In this particular embodiment bolts are employed and thus mounting portions 4 generally extend outward from the rough annular shape of seal gland 1. However, it is obvious that the diameter of seal gland 1 could easily be maintained as a constant with radially spaced bolt positions 12 at set intervals.

On the inner face of seal gland 1 and radially spaced from the opening 2 is a second seal engaging surface 5. Seal engaging surface 5 is shaped to engage seal 20 with a spool 13 extending along the axis 10 of opening 2. The preferred seal 20 in this instance is a flat circular gasket which will seal by compression between the second seal engaging surface 5 and one end of the spool. Of course the second seal engaging surface 5 may be indented to receive and secure an o-ring type seal and the like, the type of seal on this surface not being critical. Though not preferred, proper shaping of seal engaging surface 5 to effect close mating with the end of the spool 13 may permit the seal to be eliminated.

Radially spaced from the second seal engaging surface 5 is a third seal engaging surface 6. The third seal engaging surface 6 must be positioned so as to engage seal 21 with a rim area of stuffing box 17. As shown, where the seal is to be engaged with the inner lip of the stuffing box 17 the preferred seal is an o-ring received and secured in the indentation. However, it is clear that the third seal engaging surface 6 may be positioned in any manner that will prevent leakage between seal gland 1 and machinery housing 18. One alternative position for the third seal engaging surface is facing the outerlip of the stuffing box 17 radially inward from bolt positions 12.

Sealed or connected with seal gland 1 at second seal engaging surface 5 is spool 13. It is the purpose of spool 13 to substantially fill the stuffing box 17 and to provide additional seal engaging surfaces along shaft 16 and the innerwall of stuffing box 17. Shown in this embodiment is a fourth seal engaging surface 15 running the circumference of the spool 13 inner wall 14. The fourth seal engaging surface 15 is designed in this instance as a baffle seal where an o-ring, stationary on shaft 10, rotates inside fourth seal engaging surface 15. Fourth seal engaging surface 15 is cut with sufficient width and depth so that the o-ring rotates just free of contact with the spool 13. This type of seal is particularly effective where viscous materials are handled. However, the fourth seal engaging surface may also be designed to receive more commonly used seals which may be stationary with respect to either the shaft 10 or spool 13 such as a lip seal, an o-ring stationary in the spool 13, and the like. The fourth seal engaging surface 15 may be repeated down the length of the spool 13. Although not shown further seal engaging surfaces may be placed so as to run the circumference of the spool 13 and or outer wall and secure seals which make contact with the stuffing box 17 wall.

As stated above, a purpose of spool 13 is to substantially fill the volume of the retrofitted stuffing box 17. Thus, it is preferred that the length, diameter and thickness should approximate the dimensions of the stuffing box 17 and entirely fill the available space. It is preferred that spool 13 make no contact with shaft 16. The contact of spool 13 with the stuffing box 17 inner and back wall is necessary however in this instance to maintain pressure at the noted surfaces of the spool 13 and the second seal engaging surface 5. Persons skilled in the art will recognize that contact between spool 13 and stuffing box 17 is not necessary with the proper placement of additional seals or gaskets.

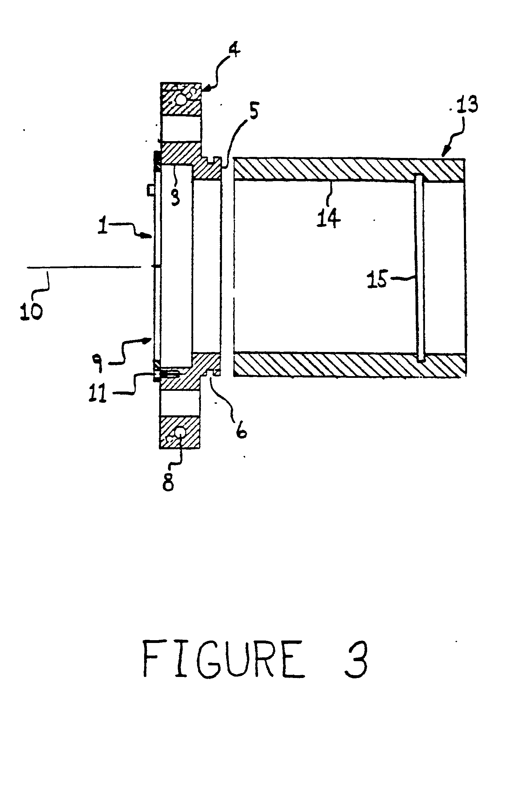

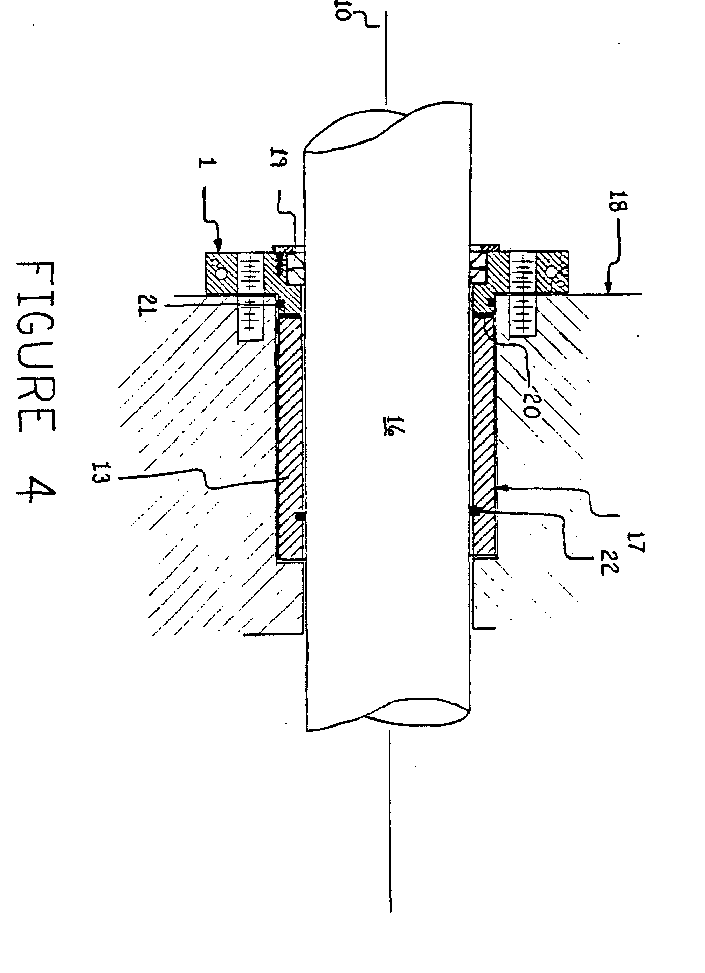

Similar to seal gland 1, spool 13 is split along a plane which is defined by the axis 10 of opening 2 and a point not on the axis. Figures 3 and 4 depict this split aligned with the split 1 of seal gland 1. In the embodiment shown, the spool 13 is mated by contact with the stuffing box 17 wall.

Spool 13 may be made from a variety of materials including aluminum, steel and other metals, but is preferably made from thermoplastic or thermoset plastics including polyesters, polycarbonates and polyolefins such as polytetrafluoroethylene. Of course, where a thermoplastic or thermoset plastic is used, high heat resistance may be essential. In this instance, spool 13 is polytetrafluoroethylene, which facilitates the mating of the split and the omission of a seal at seal engaging surface 5.

According to the invention herein, packing seals may be retrofitted by removing the packing and packing seal gland. Spool 13 is split and placed around shaft 16 mating the split surfaces. Concurrently fourth seal 22 is cut, placed around shaft 16, rejoined with adhesive, and seated in fourth seal engaging surface 15. Adhesive or a strip gasket may be used to join the mated split of spool 13 but where the fit of the mated surfaces is tight and the fit of spool 13 against the walls of stuffing box 17 is snug, adhesives may be unnecessary. Subsequently spool 13 and fourth gasket 22 are fitted into the stuffing box 17. Seal gland 1 is disassembled and split along split 7 and placed around shaft 16. Seal gland 1 is mated using bolts in bolt positions 8. Second seal 20, if used, and third seal 21 are cut, placed around shaft 16, rejoined with adhesive, and seated on their respective seal engaging surfaces 5 and 6. Seal gland 1 is torqued down to seal with spool 13 using bolts in bolt positions 12. Subsequently, first seal 19, a pair are shown here, is cut, placed around shaft 16, rejoined with adhesive, and seated on seal engaging surface 3. Seal 19 is secured with seal retaining means 9 and bolts in bolt positions 11.

The split seal assembly of the instant invention is particularly suitable for use on shafts which do not have accessible ends. Mixer shafts, pump shafts and the like have drive units which attach to the shaft as some point and would prevent retrofitting of whole gland seals on shafts which are not easily disassembled.

The split seal assembly herein, of course, requires maintenance, but unlike packed seals will provide an effective seal in situations where the shaft is worn and exhibits run out and wobble. The present invention is particularly advantageous where large shafts are employed, i.e. shafts having a diameter of two inches or more. Further, the present invention finds its greatest utility for seals on relatively slow turning shafts, for example shafts which see rotational velocities less than about 100 rpm, and for seals which have low to moderate pressure heads, for example 0-200 psig (0-1400.10³Pa). Machinery fitting the above description includes mixers for the food industry such as bread dough mixers and mixers for the chemical industry such as rubber compounding mixers.

## Claims

1. A split seal assembly comprising:
   (a) a seal gland (1) defining an axially centered opening (2) comprising:
       (i) a first seal engaging surface (3) radially located around said opening to engage a seal (19) with a protruding shaft (16),
       (ii) a mounting portion (4) radially spaced from seal engaging surfaces,
       (iii) a second seal engaging surface (5) or connecting surface on the axial inner face of said gland radially spaced from said opening to engage a seal (20) or connection with a spool (13) extending along the axis of said opening, and
    (iv) a third seal engaging surface (6) on the axial inner face of said gland radially spaced from said second seal engaging surface to engage a (21) seal with a rim area of a stuffing box; and
(b) said spool (13), extending along said axis of said opening from said second seal engaging surface of said gland having length, diameter and thickness to substantially occupy said stuffing box and having on the interior surface thereof a fourth seal engaging surface (15) to engage a seal (22) with said shaft (16);
wherein said seal gland (1) and said spool (13) are split along a plane which is defined by said axis of said opening and a point not on said axis with means to mate the split.

2. The split seal assembly of Claim 1 wherein said axially centered opening (2) has a diameter of greater than about 2 inches (50 mm).

3. The split seal assembly of Claim 1 wherein said spool (13) has, on said interior surface thereof, multiple seal engaging surfaces to engage seals with said shaft.

4. A sealed shaft comprising:
   (a) a shaft (16) protruding from a stuffing box in a housing; and
   (b) a seal gland (1) defining an axially centered opening enclosing said shaft, said seal gland being defined as in one or more of the Claims 1 to 3, wherein :
       (i) a seal (19) seated on said first seal engaging surface (3) engages with said protruding shaft,
       (ii) said mounting portion (4) secures said seal gland to said housing,
       (iii) said second seal engaging surface (5) or connecting surface having a seal (20) seated thereon engages or has connection made with said spool (13),
       (iv) said third seal engaging surface (6) having a seal (21) seated thereon engages with a rim area of said stuffing box; and
   (c) said spool (13) being split and having on the fourth seal engaging surface (15) a seal (22) engaged with said shaft.

5. A method to retrofit a packed seal around an axially oriented shaft (16) comprising the steps of:

(a) fitting a split spool (13) into a stuffing box around said shaft, said spool having a seal (22) on the interior surface thereof to engage with said shaft and having length, diameter and thickness to substantially occupy said stuffing box; and

(b) torquing down on said spool a seal gland (1) to engage seals or connections, said seal gland defining an axially centered opening (2) around said shaft and being defined as in one or more of the Claims 1 to 3, wherein said first, second and third seal engaging surfaces (3,5,6) each have a seal seated thereon to engage or connect with the respective portions and said mounting portion has means for torquing down.

**Revendications**

1. Assemblage d'étanchéité fendu comprenant :

(a) un presse-étoupe d'étanchéité (1) qui définit une ouverture centrée axialement (2), ce presse-étoupe d'étanchéité comprenant :

(i) une première surface d'engagement d'étanchéité (3) placée radialement autour de ladite ouverture afin d'engager une étanchéité (19) avec un arbre qui se projette (16) ;

(ii) une partie de montage (4) espacée radialement des surfaces d'engagement d'étanchéité ;

(iii) une seconde surface d'engagement d'étanchéité (5) ou surface de liaison située sur la face axiale interne dudit presse-étoupe et radialement espacée de ladite ouverture afin d'engager une étanchéité (20) ou liaison avec une bague (13) qui s'étend le long de l'axe de ladite ouverture ; et

(iv) une troisième surface d'engagement d'étanchéité (6) située sur la face axiale interne dudit presse-étoupe et radialement espacée de ladite seconde surface d'engagement d'étanchéité afin d'engager une étanchéité (21) avec une zone de rebord d'une boîte de garniture ; et

(b) ladite bague (13) s'étendant le long dudit axe de ladite ouverture depuis ladite seconde surface d'engagement d'étanchéité dudit presse-étoupe, ayant une longueur, un diamètre et une épaisseur tels qu'elle occupe sensiblement ladite boîte à garniture et ayant sur sa surface interne une quatrième surface d'engagement d'étanchéité (15) afin d'engager une étanchéité (22) avec ledit arbre (16) ; et dans cet assemblage, ledit presse-étoupe d'étanchéité (1) et ladite bague (13) sont fendus le long d'un plan qui est défini par ledit axe de ladite ouverture et par un point qui n'est pas sur ledit axe, un moyen étant prévu pour s'accoupler à la fente.

2. Assemblage d'étanchéité fendu selon la revendication 1, dans lequel ladite ouverture axialement centrée (2) a un diamètre supérieur à environ 50 mm (2 pouces).

3. Assemblage d'étanchéité fendu selon la revendication 2, dans lequel ladite bague (13) a, sur sa surface interne, de multiples surfaces d'engagement d'étanchéité afin d'engager des étanchéités avec ledit arbre.

4. Arbre rendu étanche comprenant :

(a) un arbre (16) qui dépasse d'une boîte à garniture et qui est abrité dans un bâti ; et

(b) un presse-étoupe d'étanchéité (1) qui définit une ouverture axialement centrée qui entoure ledit arbre, ledit presse-étoupe d'étanchéité étant défini dans une ou plusieurs des revendications 1 à 3 et étant caractérisé en ce que :

(i) une étanchéité (19) assise sur ladite première surface d'engagement d'étanchéité (3) s'engage avec ledit arbre qui dépasse ;

(ii) ladite partie de montage (4) fixe ledit presse-étoupe d'étanchéité au bâti ;

(iii) ladite seconde surface d'engagement d'étanchéité (5) ou surface de liaison qui comporte une étanchéité (20) qui est assise sur elle s'engage ou est en liaison avec ladite bague (13) ; et

(iv) ladite troisième surface d'engagement d'étanchéité (6) qui comporte une étanchéité (21) qui est assise sur elle s'engage avec une zone de bord de ladite boîte à garniture ; et

(c) ladite bague (13) qui est fendue et qui a sur la quatrième surface d'engagement d'étanchéité (15) une étanchéité (22) qui s'engage avec ledit arbre.

5. Procédé permettant d'améliorer une étanchéité de garniture autour d'un arbre axialement orienté (16), ce procédé comprenant les étapes suivantes :

(a) ajustement d'une bague fendue (13) à l'intérieur d'une boîte à garniture qui est autour dudit arbre, la bague ayant une étanchéité (22) située sur sa surface interne afin d'assurer un engagement avec ledit arbre et ayant une longueur, un diamètre et une épaisseur dimensionnés de manière à occuper sensiblement ladite boîte à garniture ; et

(b) application d'un couple dirigé vers le bas sur ladite bague dudit presse-étoupe d'étanchéité (1) afin d'engager des étanchéités ou liaisons, ledit presse-étoupe d'étanchéité définissant une ouverture axialement centrée (2) autour dudit arbre, étant défini dans une ou plusieurs des revendications 1 à 3 et étant caractérisé en ce que lesdites première, seconde et troisième surfaces d'engagement d'étanchéité (3, 5, 6) ont chacune une étanchéité qui est assise sur elle afin d'assurer un engagement ou une liaison avec les parties respectives et en ce que ladite partie de montage comporte un moyen pour appliquer un couple dirigé vers le bas.

## Patentansprüche

1. Geschlitzter Dichtungsaufbau umfassend:
   a) eine Dichtungsstopfbuchse (1), die eine axial zentrierte Öffnung (2) begrenzt, wobei die Dichtungsstopfbuchse umfaßt:
   (i) eine erste Dichtungs-Eingriffsoberfläche (3), die radial um die genannte Öffnung herum angeordnet ist, um eine Dichtung (19) mit einem hervortretenden Schaft (16) in Eingriff zu bringen,
   (ii) einen Montageabschnitt (4), der radial im Abstand von Dichtungs-Eingriffoberflächen angeordnet ist,
   (iii) eine zweite Dichtungs-Eingriffoberfläche (5) oder Verbindungsoberfläche auf der axial inneren Fläche der Stopfbuchse radial im Abstand von der genannten Öffnung, um eine Dichtung (20) oder Verbindung mit einer Hülse (13) in Eingriff zu bringen, die sich längs der Achse der genannten Öffnung erstreckt und
   (iv) eine dritte Dichtungs-Eingriffsoberfläche (6) auf der axial inneren Fläche der Stopfbuchse radial im Abstand von der zweiten Dichtungs-Eingriffsoberfläche, um eine Dichtung (21) mit einer Randfläche einer Stopfbuchsendichtung in Eingriff zu bringen und
   b) die genannte Hülse (13) sich entlang der Achse der Öffnung von der zweiten Dichtungs-Eingriffsoberfläche der Stopfbuchse aus erstreckt und eine Länge, einen Durchmesser und eine Dicke hat, um die Stopfbuchsendichtung im wesentlichen auszufüllen, wobei die Hülse auf der inneren Oberfläche eine vierte Dichtungs-Eingriffsoberfläche (15) aufweist, um eine Dichtung (22) in Eingriff mit dem genannten Schaft (16) zu bringen,
wobei die genannte Dichtungs-Stopfbuchse (1) und die genannte Hülse (13) entlang einer Ebene geschlitzt sind, die durch die genannte Achse der Öffnung und einen Punkt definiert ist, der sich nicht auf der genannten Achse befindet, mit einer Einrichtung, um in den Schlitz einzugreifen.

2. Geschlitzter Dichtungsaufbau nach Anspruch 1, worin die axial zentrierte Öffnung (2) einen Durchmesser von mehr als etwa 50 mm (2 Zoll) hat.

3. Geschlitzter Dichtungsaufbau nach Anspruch 1, · worin die Hülse (13) auf ihrer inneren Oberfläche mehrere Dichtungs-Eingriffsoberflächen aufweist, um Dichtungen mit dem genannten Schaft in Eingriff zu bringen.

4. Abgedichteter Schaft umfassend:
   a) einen Schaft (16) der aus einer Stopfbuchsendichtung in einem Gehäuse hervorragt und
   b) eine Dichtungsstoffbuchse (1), die eine axial zentrierte Öffnung begrenzt, die den genannten Schaft einschließt, wobei die Dichtungsstopfbuchse gemäß einem oder mehreren der Ansprüche 1 bis 3 definiert ist, wobei
   (i) eine Dichtung (19), die auf der ersten Dichtungs-Eingriffsoberfläche (3) sitzt, mit dem vorstehenden Schaft in Eingriff steht,
   (ii) der Montageabschnitt (4) die Dichtungsstopfbuchse an dem genannten Gehäuse befestigt,
   (iii) die genannte zweite Dichtungs-Eingriffsoberfläche (5) oder Verbindungsoberfläche, auf der eine Dichtung (20) sitzt, in Eingriff mit der genannten Hülse (13) steht oder Verbindung damit aufweist,
   (iv) auf der dritten Dichtungs-Eingriffsoberfläche (6) eine Dichtung (21) sitzt, die mit einer Randfläche der Stopfbuchsendichtung in Eingriff steht und
   c) die Hülse (13) geschlitzt ist und auf der vierten Dichtungs-Eingriffsoberfläche (15) eine Dichtung (22) aufweist, die mit dem Schaft in Eingriff steht.

5. Verfahren zum Anbringen einer gepackten Dichtung um einen axial orientierten Schaft (16), umfassend die Stufen:
   a) Einpassen einer geschlitzten Hülse (13) in eine Stopfbuchsendichtung um den genannten Schaft herum, wobei die Hülse eine Dichtung (22) auf der inneren Oberfläche aufweist, um mit dem Schaft in Eingriff zu treten und sie Länge, Durchmesser und Dikke aufweist, um die Stopfbuchsendichtung im wesentlichen auszufüllen und

b) Anschrauben einer Dichtungsstopfbuchse (1) an der Hülse, um mit Dichtungen oder Verbindungen in Eingriff zu treten, wobei die Dichtungsstopfbuchse eine axial zentrierte Öffnung (2) um den Schaft herum begrenzt und gemäß einem oder mehreren der Ansprüche 1 bis 3 ausgebildet ist, wobei die erste, zweite und dritte Dichtungs-Eingriffsoberfläche (3, 5, 6) jeweils eine Dichtung aufweisen, um mit entsprechenden Abschnitten in Eingriff zu treten oder damit zu verbinden und der genannte Montageabschnitt eine Einrichtung zum Anschrauben aufweist.

FIGURE 1

FIGURE 2

FIGURE 3

EP 0 265 789 B1

FIGURE 4